# EUROPÄISCHE PATENTSCHRIFT

(11) **EP 1 196 507 B1**
(45) Veröffentlichungstag und Bekanntmachung des Hinweises auf die Patenterteilung: **08.12.2004**
(21) Anmeldenummer: 00943952.2
(22) Anmeldetag: 30.06.2000
(51) Int. Cl.: C09D 125/00, B05D 1/38

(54) **BASISLACK UND SEINE VERWENDUNG ZUR HERSTELLUNG VON FARB- UND/ODER EFFEKTGEBENDEN BASISLACKIERUNGEN UND MEHRSCHICHTLACKIERUNGEN**
BASE COAT AND ITS USE FOR PRODUCING COLOR AND/OR EFFECT-PRODUCING BASE COATINGS AND MULTI-LAYER COATINGS
PEINTURE D'APPRET ET SON UTILISATION POUR LA PRODUCTION DE PEINTURES D'APPRET ET DE PEINTURES MULTICOUCHES A COLORATION OU A EFFET

(30) Priorität: 02.07.1999 DE 19930665
(43) Veröffentlichungstag der Anmeldung: 17.04.2002
(73) Patentinhaber: BASF Coatings AG, 48165 Münster (DE)
(72) Erfinder: BREMSER, Wolfgang, D-48165 Münster (DE)
(74) Vertreter: Fitzner, Uwe, Dr.
(86) Internationale Anmeldenummer: PCT/EP2000/006108
(87) Internationale Veröffentlichungsnummer: WO 2001/002499

(56) Entgegenhaltungen:
- WO-A1-97/31031
- US-A- 5 433 701
- DATABASE WPI Week 198624 Derwent Publications Ltd., London, GB; Class A17, AN 1986-152526, XP002901341 & JP 61 085417 A (NIPPON PETROCHEMICALS CO LTD) 01 Mai 1986,
- DATABASE WPI Week 199610 Derwent Publications Ltd., London, GB; Class A13, AN 1996-094214, XP002901342 & JP 08 003208 A (NIPPON STEEL CHEM CO) 09 Januar 1996,

## Beschreibung

Die vorliegende Erfindung betrifft einen neuen Basislack, insbesondere einen Wasserbasislack. Außerdem betrifft die vorliegende Erfindung ein Verfahren zur Herstellung des neuen Basislacks. Des weiteren betrifft die vorliegende Erfindung die Verwendung des neuen Basislacks zur Herstellung von farb- und/oder effektgebenden Basislackierungen und Mehrschichtlackierungen, insbesondere für Kraftfahrzeuge. Darüber hinaus betrifft die vorliegende Erfindung neue Basislackierungen und Mehrschichtlackierungen sowie die hiermit beschichteten grundierten oder ungrundierten Substrate, insbesondere Kraftfahrzeugkarosserien.

Basislacke, insbesondere Wasserbasislacke, welche als Bindemittel Acrylatcopolymerisate enthalten, sind aus der Patentschrift DE-A-39 42 804 bekannt. Die Acrylatcopolymerisate werden durch zweistufige Emulsionspolymerisation hergestellt. Die Basislacke weisen eine hohe Lagerstabilität auf. Die hiermit hergestellten Basislackierungen haben einen guten Metallic-Effekt, eine gute Haftung zur Füllerschicht und zur Klarlackierung, einen guten Glanz und eine gute Beständigkeit im Schwitzwasserkonstantklima nach DIN 50017.

Aus den Patentschriften WO 99/15597 oder DE-A-197 41 554 sind ebenfalls Wasserbasislacke bekannt, die mindestens ein Acrylatcopolymerisat auf Basis von 30 bis 60 Gew.-% C₁-C₈-Alkyl(meth)acrylatmonomeren, 30 bis 60 Gew.-% vinylaromatischen Monomeren und 0,5 bis 10 Gew.-% (Meth)Acrylsäure, mindestens einen nicht assoziativ wirkenden Verdicker, der mindestens ein Acrylatcopolymerisat auf Basis von C₁-C₆-Alkyl(meth)acrylat und (Meth)acrylsäure enthält, und mindestens ein weiteres Poly(meth)acrylatharz, das mindestens eine reaktive Gruppe für Isocyanate enthält, enthalten. Die Wasserbasislackschichten bilden während des Trocknungsvorgangs keine Risse und sind mit Pulverklarlacken bzw. Pulverslurry-Klarlacken gut verträglich.

Die bekannten Basislacke können nach dem bei der Automobilserienlackierung bevorzugt angewandten Naß-in-naß-Verfahren bearbeitet werden, d. h., daß die Basislacke auf ein grundiertes oder ungrundiertes Substrat appliziert werden, wodurch eine Basislackschicht resultiert, welche indes nicht ausgehärtet, sondern nur vorgetrocknet und mit einer Klarlackschicht überschichtet wird, wonach die beiden Schichten gemeinsam gehärtet werden.

Basislacke, insbesondere Wasserbasislacke, weisen somit zahlreiche Vorteile auf, die sie für eine wirtschaftliche Verwertung attraktiv machen.

Die Herstellung der Acrylatcopolymerisate selbst kann nach allgemein gut bekannten Polymerisationsverfahren in Masse, Lösung oder Emulsion erfolgen. Polymerisationsverfahren zur Herstellung von Acrylatcopolymerisaten, insbesondere Polyacrylatharzen, sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter Copolymerisationsverfahren für die Herstellung von Acrylatcopolymerisaten werden in den Patentschriften DE-A-197 09 465, DE-C-197 09 476, DE-A-28 48 906, DE-A-195 24 182, EP-A-0 554 783, EP-B-0 650 979 WO 95/27742, DE-A-38 41 540 oder WO 82/02387 beschrieben.

Als Reaktoren für die Copolymerisationsverfahren kommen die üblichen und bekannten Rührkessel, Rührkesselkaskaden, Rohrreaktoren, Schlaufenreaktoren oder Taylorreaktoren; wie sie beispielsweise in den Patentschriften DE-B-1 071 241 oder EP-A-0 498 583 oder in dem Artikel von K Kataoka in Chemical Engineering Science, Band 50, Heft 9, 1995, Seiten 1409 bis 1416, beschrieben werden, in Betracht.

Die für die Herstellung der Acrylatcopolymerisate angewandte radikalische Polymerisation ist indes häufig sehr exotherm und schwer zu regeln. Für die Reaktionsführung bedeutet dies, daß hohe Konzentrationen an Monomeren und/oder die sogenannte batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils der Acrylatcopolymerisate ist aber für ihre Verwendung als Bindemittel in Basislacken, insbesondere Wasserbasislacken, von großer Bedeutung, da hierdurch das anwendungstechnische Eigenschaftsprofil der Basislacke direkt beeinflußt werden kann.

Es hat daher nicht an Versuchen gefehlt, die radikalische Copolymerisation olefinisch ungesättigter Monomerer gezielt zu regeln.

So beschreibt die internationale Patentanmeldung WO 98/01478 ein Verfahren, bei dem die Copolymerisation in Gegenwart eines radikalischen Starters und einer Thiocarbonylthio-Verbindung als Kettenübertragungsmittel durchgeführt wird.

Die internationale Patentanmeldung WO 92/13903 beschreibt ein Verfahren zur Herstellung von Copolymerisaten mit einem niedrigen Molekulargewicht durch Radikalkettenpolymerisation in Gegenwart eines Gruppenübertragungsmittels, das eine Kohlenstoff-Schwefel-Doppelbindung aufweist. Diese Verbindungen wirken nicht nur als Kettenübertragungsmittel, sondern auch als Wachstumsregler, so daß nur Copolymerisate mit niedrigem Molekulargewicht resultieren.

Aus der internationalen Patentanmeldung WO 96/15157 geht ein Verfahren zur Herstellung von Copolymerisaten mit vergleichsweise enger Molekulargewichtsverteilung hervor, bei dem ein Monomer mit einem Vinylterminierten Makromonomeren in Anwesenheit eines radikalischen Initiators umgesetzt wird.

Außerdem geht aus der internationalen Patentanmeldung WO 98/37104 die Herstellung von Acrylatcopolymerisaten mit definierten Molekulargewichten durch radikalische Polymerisation in Gegenwart eines Kettenübertragungsmittels mit einer C-C-Doppelbindung und mit Resten, die diese Doppelbindung bezüglich der radikalischen Anlagerung von Monomeren aktivieren, hervor.

Trotz bedeutsamer Fortschritte auf diesem Gebiet fehlt es noch immer an einem universell einsetzbaren Verfahren zur kontrollierten radikalischen Polymerisation, das in einfacher Weise chemisch strukturierte Polymerisate, insbesondere Acrylatcopolymerisate, liefert und mit dessen Hilfe das Eigenschaftsprofil der Polymerisate im Hinblick auf ihre Anwendung in Basislacken, insbesondere Wasserbasislacken, die der Herstellung von farb- und/oder effektgebenden Basislackierungen und Mehrschichtlackierungen dienen, gezielt eingestellt werden kann

Aufgabe der vorliegenden Erfindung ist es, neue Basislacke, insbesondere Wasserbasislacke, bereitzustellen, die sich hervorragend für die Herstellung farbund/oder effektgebender Basislackierungen und Mehrschichtlackierungen und als vorteilhafte Alternative zu den herkömmlichen Basislacken eignen. Außerdem ist es die Aufgabe der vorliegenden Erfindung neue Verfahren zur Herstellung der Basislacke vorzuschlagen, die es gestatten, deren Eigenschaftsprofil in einfacher Weise zu variieren und den Eigenschaftsprofilen der übrigen Schichten der Mehrschichtlackierungen genau anzupassen. Dies soll in einfacher Weise dadurch bewerkstelligt werden, daß das Eigenschaftsprofil der Basislacke insbesondere durch die Verwendung chemisch strukturierter Polymerisate, die durch kontrollierte radikalische Polymerisation erhältlich sind, gezielt eingestellt wird. Die mit Hilfe dieser neuen Basislacke resultierenden neuen farb- und/oder effektgebende Mehrschichtlackierungen sollen zumindest das gute Eigenschaftsprofil der bekannten Mehrschichtlackierungen aufweisen, vorzugsweise sollen sie es übertreffen. Insbesondere sollen sie eine hervorragende optische Qualität, Zwischenschichthaftung und Schwitzwasserbeständigkeit aufweisen und keine Rißbildung (mudcracking), Verlaufsstörungen oder Oberflächenstrukturen zeigen. Diese chemisch strukturierten Polymerisate sollen außerdem als Reibharze verwendbar sein, die es in vorteilhafter Weise gestatten, besonders gut einmischbare Pigmentpasten für die zur Herstellung der neuen farb- und/oder effektgebenden Mehrschichtlackierungen verwendeten Füller, Basislacke und Klarlacke bereitzustellen.

Demgemäß wurde die neue Verwendung eines Coplymerisats (A) in einem Basislack, insbesondere Wasserbasislack, der der Herstellung farb- und/oder effektgebender Basislackierungen und Mehrschichtlackierungen dient, gefunden, wobei das Copolymerisat (A) durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R**^{**1**}**R**^{**2**}**C=CR**^{**3**}**R**^{**4**} (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   in einem wäßrigen Medium herstellbar ist.

Im folgenden wird die neue Verwendung des Copolymerisats (A) als "erfindungsgemäße Verwendung" bezeichnet.

Außerdem wurde der neue Basislack, insbesondere Wasserbasislack, gefunden, enthaltend
A) als Bindemittel oder als eines der Bindemittel mindestens ein Copolymerisat, das durch radikalische Polymerisation von
   a) mindestens einem olefinisch ungesättigten Monomer und
   b) mindestens einem vom olefinisch ungesättigten Monomer (a) verschiedenen olefinisch ungesättigten Monomer der allgemeinen Formel I

      **R**^{**1**}**R**^{**2**}**C=CR**^{**3**}**R**^{**4**} (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
      in einem wäßrigen Medium herstellbar ist;
      und
B) mindestens ein farb-und/oder effektgebendes Pigment.

Im folgenden wird der neue Basislack als "erfindungsgemäßer Basislack" bezeichnet.

Außerdem wurde das neue Verfahren für die Herstellung einer farb-und/oder effektgebenden Mehrschichtlackierung ML auf einem grundierten oder ungrundierten Substrat durch
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung BL und die Klarlackierung KL resultieren, oder

(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung BL und die Klarlackierung KL resultieren,
gefunden, bei dem als Basislack der erfindungsgemäße Basislack verwendet wird.

Im folgenden wird das neue Verfahren zur Herstellung einer farb- und/oder effektgebenden Mehrschichtlackierung ML auf einem grundierten oder ungrundierten Substrat als "erfindungsgemäßes Verfahren" bezeichnet.

Im Hinblick auf den Stand der Technik war es überraschend, daß die Aufgabe, die der vorliegenden Erfindung zugrunde lag, mit Hilfe der erfindungsgemäßen Verwendung, des erfindungsgemäßen Basislacks, insbesondere des erfindungsgemäßen Wasserbasislacks, und des erfindungsgemäßen Verfahrens gelöst werden konnte.

Insbesondere überraschte, daß die erfindungsgemäßen Basislackierungen BL und Mehrschichtlackierungen ML selbst bei vergleichsweise niedrigen Einbrenntemperaturen hervorragende Eigenschaften aufweisen. Insbesondere sind sie von hervorragender optischer Qualität, weisen eine gute Zwischenschichthaftung und Schwitzwasserbeständigkeit auf und zeigen keine Rißbildung (mud cracking), Verlaufsstörungen oder Oberflächenstrukturen mehr. Noch mehr überraschte, daß auf die Verwendung von Thixotropiermitteln oder Rheologiehilfsmitteln in Basislacken, die der Erzeugung von Perlglanzeffekten und/oder dichroitischen Effekten dienen, weitgehend oder gegebenenfalls völlig verzichtet werden kann.

Erfindungsgemäß wird mindestens ein Copolymerisat (A) als Bindemittel (A) oder eines der Bindemittel (A) in dem erfindungsgemäßen Basislack verwendet.

Erfindungsgemäß wird das Copolymerisat (A) durch radikalische Polymerisation mindestens eines olefinisch ungesättigten Monomeren (a) und mindestens eines olefinisch ungesättigten Monomeren (b), welches von dem Monomeren (a) verschieden ist, hergestellt.

Beispiele geeigneter Monomere (a) sind
a1) im wesentlichen säuregruppenfreien (Meth)Acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)Acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-indendimethanol- oder Cyclohexan-1,2-, -1,3- oder -1,4-diol-di(meth)acrylat;
   Trimethylolpropan-di- oder -tri(meth)acrylat; oder Pentaerythrit-di-, - tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen.
a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -dioder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat; Monomere dieser Art werden bevorzugt für die Herstellung von selbstvernetzenden Bestandteilen (A) verwendet.
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvernetzenden Bindemitteln (A) verwendet.
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alphamethylstyrol (alle Isomere) und/oder p-Vinylbenzsolsulfonsäure.
a10) Nitrile wie Acrylnitril und/oder Methacrylnitril.
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a12) Allylverbindungen, insbesondere Allylether und -ester wie Allylmethyl-, - ethyl-, -propyl- oder -butylether oder Allylacetat, -propionat oder -butyrat.
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).
   Jedes der vorstehend genannten Monomeren (a1) bis (a14) kann für sich alleine mit dem Monomeren (b) polymerisiert werden. Erfindungsgemäß ist es indes von Vorteil, mindestens zwei Monomere (a) zu verwenden, weil hierdurch das Eigenschaftsprofil der resultierenden Copolymerisate (A) in besonders vorteilhafter Weise sehr breit variiert und dem jeweiligen Verwendungszweck des Basislacks ganz gezielt angepaßt werden kann. Insbesondere können in dieser Weise in die Copolymerisate (A) funktionelle Gruppen eingebaut werden, durch die die Copolymerisate (A) hydrophil werden, so daß sie in wäßrigen Medien dispergiert oder gelöst werden können. Außerdem können funktionelle Gruppen (afg) eingebaut werden, die mit den nachstehend beschriebenen komplementären funktionellen Gruppen (cfg) der gegebenenfalls verwendeten Vernetzungsmittel (C) thermische Vennetzunesreaktionen eingehen können. Außerdem können funktionelle Gruppen angebaut werden, die dem Copolymerisat (A) selbstvernetzende Eigenschaften verleihen wie N-Methylol- oder N-Alkoxymethylgruppen.

Erfindungsgemäß resultieren ganz besondere Vorteile, wenn als Monomere (a) die Monomeren (a1) und (a2) sowie gegebenenfalls (a3) verwendet werden.

Erfindungsgemäß werden als Monomere (b) Verbindungen der allgemeinen Formel I verwendet.

In der allgemeinen Formel I stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste, mit der Maßgabe, daß mindestens zwei der Variablen R¹, R², R³ und R⁴ für substituierte oder unsubstituierte Aryl-, Arylalkyloder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, isoButyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, - Propyl- oder-Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate (A), insbesondere der Acrylatcopolymerisate (A), ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in den eingangs genannten Vorrichtungen, insbesondere Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Erfindungsgemäß wird die Copolymerisation in einem wäßrigen Medium durchgeführt.

Das wäßrige Medium enthält im wesentlichen Wasser. Hierbei kann das wäßrige Medium in untergeordneten Mengen die nachstehend im Detail beschriebenen Vernetzungsmittel (C), Reaktivverdünner (G), Lackadditive (H) und/oder organischen Lösemittel (I) und/oder sonstige gelöste feste, flüssige oder gasförmige organische und/oder anorganische, nieder- und/oder hochmolekulare Stoffe, insbesondere oberflächenaktive Substanzen, enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Diund/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120°C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, bevorzugt 5 bis 1.500 und insbesondere 10 bis 1.000 bar durchgeführt werden.

Hinsichtlich der Molekulargewichtsverteilungen ist der Bestandteil (A) keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert. Die Molekulargewichte der Bestandteile (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Der durch die Copolymerisation resultierende Bestandteil (A) fällt als Gemisch mit dem wäßrigen Medium in der Regel in der Form einer Dispersion an. Er kann in dieser Form direkt weiterverarbeitet werden oder aber als Makroinitiator für die weitere Umsetzung mit mindestens einem weiteren Monomeren (a) in einer zweiten Stufe (ü) verwendet werden. Der in der ersten Stufe (i) resultierende Bestandteil (A) kann indes auch als Feststoff isoliert und dann weiter umgesetzt werden.

Die weitere Umsetzung gemäß der Stufe (ii) wird vorzugsweise unter den üblichen Bedingungen für eine radikalische Polymerisation durchgeführt, wobei geeignete Lösemittel (H) und/oder Reaktivverdünner (F) anwesend sein können. Dabei können die Stufen (i) und (ii) im Rahmen des erfindungsgemäßen Verfahrens sowohl räumlich als auch zeitlich getrennt voneinander durchgeführt werden. Darüber hinaus können aber die Stufen (i) und (ii) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und den gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Umsetzungsprodukt (A) oberhalb eines bestimmten Molekulargewichts auch mit dem weiteren Monomeren (a) reagiert.

Je nach Reaktionsführung ist es dabei erfindungsgemäß möglich, an den Endgruppen funktionalisierte Polymere, Block- oder Multiblock- sowie Gradienten(co)polymere, sternförmige Polymere, Pfropfcopolymere und verzweigte (Co)Polymere als Bestandteile (A) herzustellen.

Das Copolymerisat (A) kann mindestens eine, vorzugsweise mindestens zwei, funktionelle Gruppen (afg) enthalten, welche mit komplementären funktionellen Gruppen (cfg) der nachstehend beschriebenen, gegebenenfalls verwendeten Vernetzungsmittel (C) thermische Vernetzungsreaktionen eingehen können. Die funktionellen Gruppen (afg) können dabei über die Monomeren (a) in den Bestandteil (A) eingebracht oder nach dessen Synthese durch polymeranaloge Reaktionen eingerührt werden.

Beispiele geeigneter erfindungsgemäß zu verwendender komplementärer reaktiver funktioneller Gruppen (afg) und (cfg), welche Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste; die Variablen R⁶ und R⁷ stehen für gleiche oder verschiedene Alkyl-, Cycloalkyl-, Alkylcycloalkyl- oder Cycloalkylalkylreste oder sind miteinander zu einem aliphatischen oder heteroaliphatischen Ring verknüpft. Beispiele geeigneter Reste dieser Art sind die vorstehend bei den Resten R¹, R², R³ und R⁴ aufgeführten.

### Übersicht: Beispiele komplementärer funktioneller Gruppen (afg) und (cfg) im

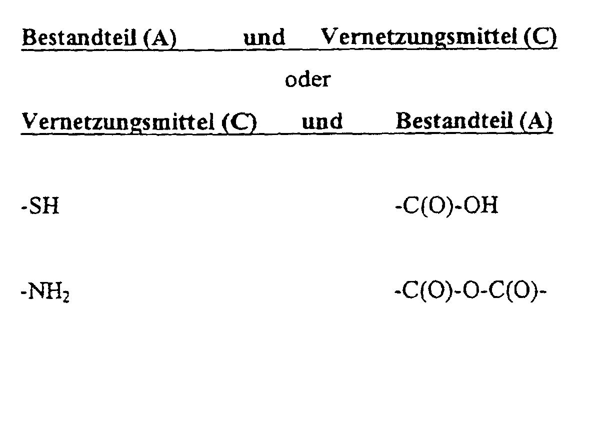

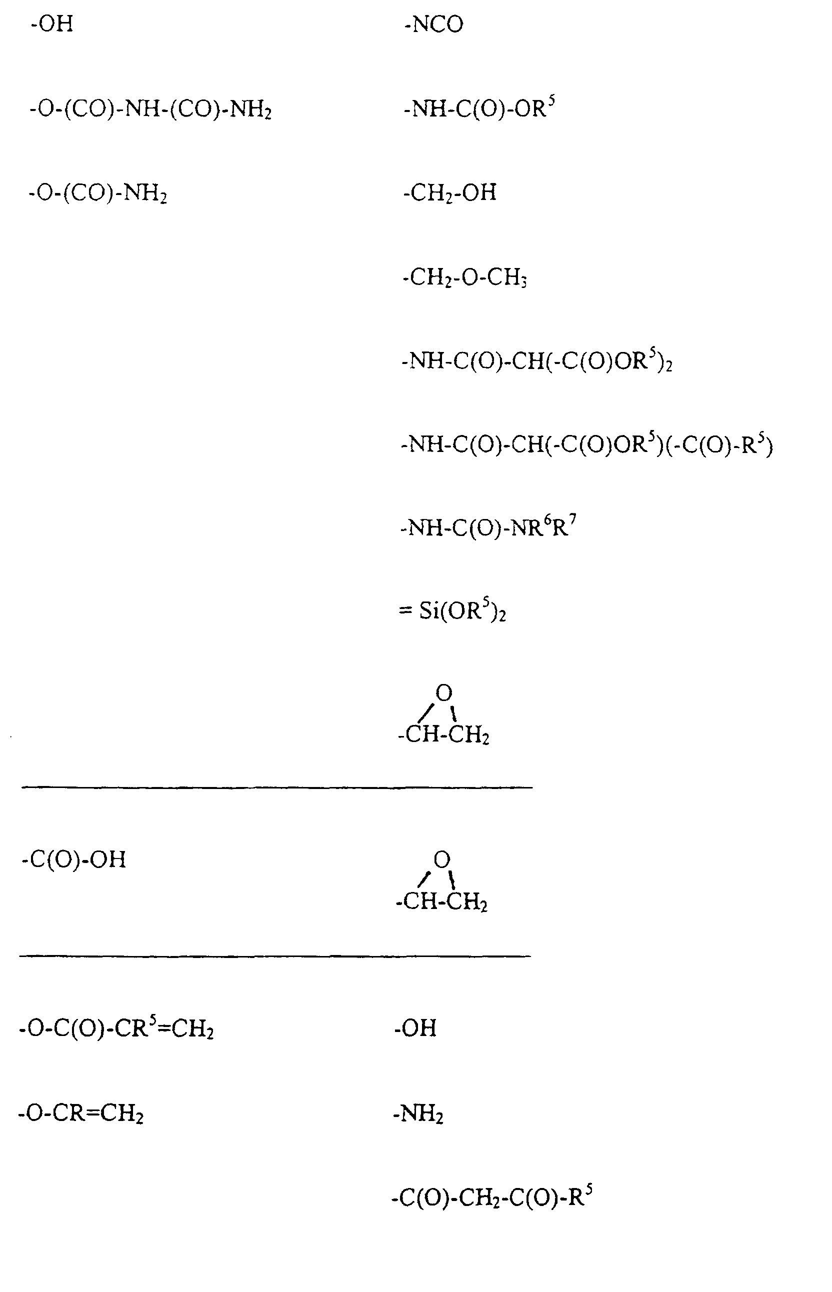

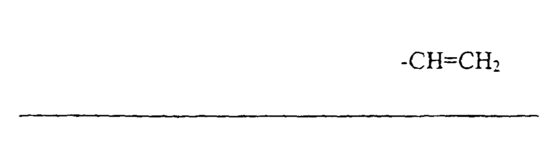

Die Auswahl der jeweiligen komplementären Gruppen (afg) und (cfg) richtet sich zum einen danach, daß sie bei der Lagerung keine unerwünschten Reaktionen eingehen und/oder die gegebenenfalls erfolgende Härtung mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100°C, insbesondere 80 °C nicht überschreitet. Im Hinblick auf diese Rahmenbedingungen haben sich Hydroxylgruppen und Isocyanatgruppen oder Carboxylgruppen und Epoxygruppen als komplementäre funktionelle Gruppen als vorteilhaft erwiesen, weswegen sie in den erfindungsgemäßen Basislacken, welche als Zwei- oder Mehrkomponentensysteme vorliegen, erfindungsgemäß bevorzugt angewandt werden. Besondere Vorteile resultieren, wenn die Hydroxylgruppen als funktionelle Gruppen (afg) und die Isocyanatgruppen als funktionelle Gruppen (cfg) verwendet werden.

Können höhere Vernetzungstemperaturen, beispielsweise von 100 bis 160°C, angewandt werden, was erfindungsgemäß bevorzugt ist, kommen als Basislacke auch Einkomponentensysteme in Betracht, worin die funktionellen Gruppen (afg) vorzugsweise Thio-, Amino-, Hydroxyl-, Carbamat-, Allophanat-, Carboxy-, und/oder (Meth)acrylatgruppen, insbesondere aber Hydroxylgruppen, und die funktionellen Gruppen (cfg) vorzugsweise Anhydrid-, Carboxy-, Epoxy-, blockierte Isocyanat-, Urethan-, Methylol-, Methylolether-, Siloxan-, Amino-, Hydroxyund/oder beta-Hydroxyalkylamidgruppen sind.

Das Copolymerisat (A) bzw. der hiermit hergestellte Basislack kann aber auch ohne ein Vernetzungsmittel (C) verfilmen und eine vorzügliche Basislackierung bilden. In diesem Falle ist das Copolymerisat (A) physikalisch härtend. Im Rahmen der vorliegenden Erfindung werden die physikalische Härtung und die Härtung über die vorstehend beschriebenen komplementären Gruppen (afg) und (cfg) unter dem Oberbegriff "thermische Härtung" zusammenfaßt.

Der Anteil des erfindungsgemäß zu verwendenden Copolymerisats (A) an dem erfindungsgemäßen Basislack kann sehr breit variieren. Vorteilhafterweise liest der Anteil bei 1 bis 90, bevorzugt 2 bis 80, besonders bevorzugt 3 bis 75 und insbesondere 4 bis 70 Gew.-%, bezogen auf den Gesamtfeststoffgehalt des erfindungsgemäßen Basislacks.

Der erfindungsgemäße Basislack kann des weiteren mindestens ein übliches und bekanntes Bindemittel (A) mit mindestens einer funktionellen Gruppe (afg) enthalten. Beispiele geeigneter üblicher und bekannter Bindemittel (A) sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, die die besagten funktionellen Gruppen (afg) enthalten. Sofern verwendet, sind sie in dem erfindungsgemäßen Basislack vorzugsweise in einer Menge von 1 bis 50, bevorzugt 2 bis 40, besonders bevorzugt 3 bis 30 und insbesondere 4 bis 25 Gew.-%, jeweils bezogen auf den Gesamtfeststoffgehalt des erfindungsgemäßen Basislacks, enthalten.

Der erfindungsgemäße Basislack enthält des weiteren mindestens ein farbgebendes und/oder effektgebendes, insbesondere mindestens ein farbgebendes und mindestens ein effektgebendes Pigment (B).

Die farbgebenden Pigmente (B) bestehen aus anorganischen oder organischen Verbindungen.

Beispiele für geeignete anorganische farbgebende Pigmente (B) sind Titandioxid, Eisenoxide, Sicotransgelb und Ruß. Beispiele für geeignete organische farbgebende Pigmente (B) sind Indanthrenblau, Cromophthalrot, Irgazinorange und Heliogengrün.

Als Effektpigmente (B) können Metallplättchenpigmente wie handelsübliche Aluminiumbronzen, gemäß DE-A-36 36 183 chromatierte Aluminiumbronzen, und handelsübliche Edelstahlbronzen sowie nichtmetallische Effektpigmente, wie zum Beispiel Perlglanz- bzw. Interferenzpigmente, eingesetzt werden. Weitere Beispiele geeigneter Effektpigmente gehen aus Römpp Lexikon Lacke und Druckfarben, Georg Thieme Verlag, 1998, Seite 176, hervor.

Der erfindungsgemäße Basislack ermöglicht aufgrund dieser Vielzahl geeigneter Pigmente (B) die Realisierung besonders zahlreicher Farbtöne und optischer Effekte. Dies gewährleistet eine universelle Einsatzbreite sowie eine sehr gute Anpassung der erfindungsgemäßen Basislackierungen BL und Mehrschichtlackierungen ML an die stetig wechselnden und wachsenden Forderungen des Marktes.

Die Pigmente (B) können auch über Pigmentpasten in die erfindungsgemäßen Basislacke eingearbeitet werden, wobei als Reibharze insbesondere die vorstehend beschriebenen Copolymerisate (A) in Betracht kommen.

Der Anteil der erfindungsgemäß zu verwendenden Pigmente (B) an dem Basislack kann sehr breit variieren. Vorteilhafterweise liegt der Anteil bei 1 bis 95, bevorzugt 2 bis 90, besonders bevorzugt 3 bis 85 und insbesondere 4 bis 80 Gew.-%, jeweils bezogen auf den Gesamtfeststoffgehalt des erfindungsgemäßen Basislacks.

Der Basislack kann des weiteren mindestens ein Vernetzungsmittel (C), welches mindestens zwei, insbesondere drei, der vorstehend im Detail beschriebenen komplementären funktionellen Gruppen (cfg) enthält, enthalten.

Handelt es sich bei dem Basislack um ein Zwei- oder Mehrkomponentensystem, werden Polyisocyanate und/oder Polyepoxide, insbesondere aber Polyisocyanate, als Vernetzungsmittel (C) verwendet.

Beispiele geeigneter Polyisocyanate (C) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Gegebenenfalls können den Polyisocyanaten noch geringe Mengen organisches Lösemittel (H), bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate (C) in üblicher und bekannter Weise hydrophil oder hydrophob modifiziert sein.

Beispiele für geeignete Polyisocyanate (C) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Polyisocyanate (C) sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Beispiele für geeignete Polyepoxide (C) sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel (C) verwendet, welche bei höheren Temperaturen mit den funktionellen Gruppen (afg) der Bindemittel (A) reagieren, um ein dreidimensionales Netzwerk aufzubauen. Selbstverständlich können solche Vernetzungsmittel (C) in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel (C) dieser Art sind blockierte Polyisocyanate. Beispiele geeigneter Polyisocyanate zur Herstellung der blockierten Polyisocyanate sind die vorstehend beschriebenen.

Beispiele für geeignete Blockierungsmittel sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel (C) können auch Tris(alkoxycarbonylamino)triazine (TACT) der allgemeinen Formel 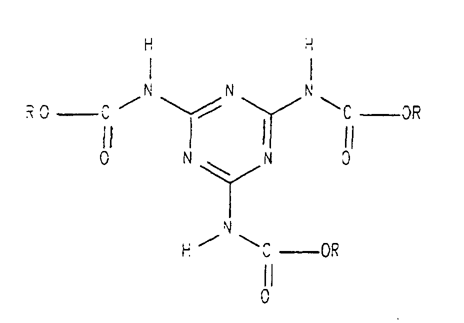 eingesetzt werden.

Beispiele geeigneter Tris(alkoxycarbonylamino)triazine (C) werden in den Patentschriften US-A-4,939,213, US-A-5,084,541 oder EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Weitere Beispiele geeigneter Vernetzungsmittel (C) sind Aminoplastharze, beispielsweise Melaminharze, Guanammharze oder Harnstoffharze. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel (C) sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel (C) sind Siloxane, insbesondere Siloxane mit mindestens einer Trialkoxy- oder Dialkoxysilangruppe.

Weitere Beispiele geeigneter Vernetzungsmittel (C) sind Polyanhydride, insbesondere Polysuccinsäureanhydrid.

Weitere Beispiele geeigneter Vernetzungsmittel (C) sind Verbindungen mit im Mittel mindestens zwei zur Umesterung befähigten Gruppen, beispielsweise Umsetzungsprodukte von Malonsäurediestern und Polyisocyanaten oder Umsetzungsprodukte von Monoisocyanaten mit Estern und Teilestern der Malonsäure mit mehrwertigen Alkoholen, wie sie in der europäischen Patentschrift EP-A-0 596 460 beschrieben werden;

Die Menge der Vernetzungsmittel (C) in dem Basislack kann - sofern verwendet - breit variieren und richtet sich insbesondere zum einen nach der Funktionalität der Vernetzungsmittel (C) und zum anderen nach der Anzahl der im Bindemittel (A) vorhandenen vernetzenden funktionellen Gruppen (afg) sowie nach der Vernetzungsdichte, die man erzielen will. Der Fachmann kann daher die Menge der Vernetzungsmittel (C) aufgrund seines allgemeinen Fachwissens, gegebenenfalls unter Zuhilfenahme einfacher orientierender Versuche ermitteln. Vorteilhafterweise ist das Vernetzungsmittel (C) in dem erfindungsgemäßen Basislack in einer Menge von 1 bis 60, bevorzugt 2 bis 50, besonders bevorzugt 3 bis 45 und insbesondere 4 bis 40 Gew.-%, jeweils bezogen auf den Gesamtfeststoffgehalt des erfindungsgemäßen Basislacks, enthalten. Hierbei empfiehlt es sich des weiteren, im Falle seiner Verwendung die Mengen an Vernetzungsmittel (C) und Bindemittel (A) so zu wählen, daß in dem Basislack das Verhältnis von funktionellen Gruppen (cfg) im Vernetzungsmittel (C) und funktionellen Gruppen (afg) im Bindemittel (A) zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Wenn der erfindungsgemäße Basislack nicht nur thermisch sondern auch mit aktinischer Strahlung, insbesondere UV-Strahlung und/oder Elektronenstrahlung, härtbar sein soll (Dual Cure), enthält er mindestens einen Bestandteil (D), welcher mit aktinischer Strahlung härtbar ist. Soll der erfindungsgemäße Basislack jedoch überwiegend (Dual Cure) oder ausschließlich mit aktinischer Strahlung härtbar sein, enthält er obligatorisch einen Bestandteil (D).

Als Bestandteile (D) kommen grundsätzlich alle mit aktinischer Strahlung, insbesondere UV-Strahlung und/oder Elektronenstrahlung, härtbaren oligomeren und polymeren Verbindungen in Betracht, wie sie üblicherweise auf dem Gebiet der UV-härtbaren oder mit Elektronenstrahlung härtbaren Basislacke verwendet werden.

Vorteilhafterweise werden strahlenhärtbare Bindemittel als Bestandteile (D) verwendet. Beispiele geeigneter strahlenhärtbarer Bindemittel (D) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Bevorzugt werden Bindemittel (D) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Sofern die Bestandteile (D) mit verwendet werden, sind sie in dem Basislack in einer Menge von vorzugsweise 1 bis 60, bevorzugt 1,5 bis 50, besonders bevorzugt 2 bis 40 und insbesondere 2,5 bis 30 Gew.-%, jeweils bezogen auf den Gesamtfeststoffgehalt des erfindungsgemäßen Basislacks, enthalten.

Der erfindungsgemäße Basislack kann desweiteren mindestens einen Photoinitiator (E) enthalten. Wenn der Basislack bzw. die hieraus hergestellten Schichten im Rahmen des erfindungsgemäßen Verfahrens zusätzlich mit UV-Strahlung vernetzt werden sollen, ist die Verwendung eines Photoinitiators (E) im allgemeinen notwendig. Sofern er mit verwendet wird, ist er in dem erfindungsgemäßen Basislack vorzugsweise in Anteilen von 0,01 bis 10, bevorzugt 0,1 bis 8 und insbesondere 0,5 bis 6 Gew.-%, jeweils bezogen auf den Gesamtfeststoffgehalt des erfindungsgemäßen Basislacks, enthalten.

Beispiele geeigneter Photoinitiatoren (E) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbesondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure ® MBF der Firma Rahn und Lucirin® TPO der Firma BASF AG erhältlichen Produkte eingesetzt werden.

Neben den Photoinitiatoren (E) können übliche Sensibilisatoren (E) wie Anthracen in wirksamen Mengen verwendet werden.

Des weiteren kann der Basislack mindestens einen Initiator der thermischen Vernetzung (F) enthalten. Diese bilden ab 80 bis 120°C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,01 bis 10, vorzugsweise 0,05 bis 8 und insbesondere 0,1 bis 5 Gew.-%, jeweils bezogen auf dem erfindungsgemäßen Basislack.

Darüber hinaus kann der Basislack mindestens einen mit aktinischer Strahlung und/oder thermisch härtbaren Reaktivverdünner (G) enthalten.

Beispiele geeigneter thermisch vernetzbarer Reaktiverdünner (G) sind verzweigte, cyclische und/oder acyclische C₉-C₁₆-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vernetzbarer Reaktiverdünner (G) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1.000 und ein massenmittleres Molekulargewicht Mw von 600 bis 1.100 auf.

Weitere Beispiele geeigneter thermisch vernetzbarer Reaktiverdünner (G) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner (G) sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktiverdünner (G) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylenglykol, z.B. Isopropoxypropanol, genannt.

Als Reaktivverdünner (G), welche mit aktinischer Strahlung vernetzt werden können, werden beispielsweise Polysiloxanmakromonomere, (Meth)Acrylsäure und deren sonstigen Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Tripropylenglykoldiacryiat, Styrol, Vinyltoluol, Divinylbenzol, Pentaerythrittri(meth)acrylat, Pentaerythrittetra(meth)acrylat, Dipropylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobornyl(meth)acrylat, Dimethylacrylamid und Dicyclopentylacrylat, sowie die in der EP-A-0 250 631 beschriebenen, langkettigen linearen Diacrylate mit einem Molekulargewicht von 400 bis 4.000, bevorzugt von 600 bis 2.500 genannt. Beispielsweise können die Acrylatgruppen auch durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.

Bevorzugt werden als Reaktivverdünner (G) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.

Sofern sie mit verwendet werden, werden die Reaktivverdünner (G) in einer Menge von vorzugsweise 1 bis 70, besonders bevorzugt 2 bis 65 und insbesondere 3 bis 50 Gew.-%, jeweils bezogen auf den Gesamtfeststoffgehalt des erfindungsgemäßen Basislacks angewandt.

Der Basislack kann lackübliche Additive (H) in wirksamen Mengen enthalten. Vorteilhafterweise sind die Additive (H) unter den Verarbeitungs- und Applikationsbedingungen des erfindungsgemäßen Basislacks nicht flüchtig.

Beispiele geeigneter Additive (H) sind
- UV-Absorber;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Trockenstoffe;
- Hautverhinderungsmittel;
- Neutralisationsmittel wie Ammoniak oder Dimethylethanolamin;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen , Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe« verwiesen;
- rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Biozide.

Weitere Beispiele geeigneter Lackadditive (H) werden in dem Lehrbuch »Lackadditive« von Johan Bieleman, Wiley-VCH, Weinheim, New York, 1998, beschrieben.

Vorzugsweise enthält der Basislack diese Additive (H) in Mengen bis zu 40, besonders bevorzugt bis zu 30 und insbesondere bis zu 20 Gew.-%, jeweils bezogen auf den Gesamtfeststoffgehalt des Beschichtungsstoffs.

Nicht zuletzt können die erfindungsgemäßen Basislacke, insbesondere im Falle nichtwäßriger Basislacke, 1 bis 70, vorzugsweise 2 bis 60 und insbesondere 3 bis 50 Gew.-%, bezogen auf den applikationsfertigen erfindungsgemäßen Basislack, wassermischbare und nicht wassermischbare organische Lösungsmittel (I) enthalten, wie z.B. aliphatische, aromatische und/oder cycloaliphatische Kohlenwasserstoffe wie Toluol oder Methylcylohexan oder Decalin, Alkylester der Essigsäure oder Propionsäure, Alkanole wie Ethanol, Ketone wie Methylisobutylketon, Glykolether Glykoletherester, und/oder Ether wie Tetrahydrofuran. Im Rahmen der vorliegenden Erfindung kann auch Kohlendioxid als Lösemittel (I) verwendet werden.

Der erfindungsgemäße Basislack kann in unterschiedlichen Formen vorliegen.

So kann er bei entsprechender Wahl seiner vorstehend beschriebenen Bestandteile (A) und (B), sowie gegebenenfalls mindestens einem seiner Bestandteile (A; übliche und bekannte Bindemittel), (C), (D), (E), (F), (G) und/oder (H) als flüssiger Basislack vorliegen, welcher im wesentlichen frei von organischen Lösemitteln und/oder Wasser ist (100%-System).

Indes kann es sich bei dem Basislack um eine Lösung oder Dispersion der vorstehend beschriebenen Bestandteile in organischen Lösemitteln (I) und/oder Wasser handeln. Es ist ein weiterer Vorteil des erfindungsgemäßen Basislacks, daß hierbei Feststoffgehalte bis zu mehr als 80 Gew.-%, bezogen auf den Basislack, eingestellt werden können.

Des weiteren kann der erfindungsgemäße Basislack bei entsprechender Wahl seiner vorstehend beschriebenen Bestandteile ein Pulverlack sein. Zu diesem Zweck kann der Bestandteil (C) mikroverkapselt sein, wenn es sich um ein Polyisocyanat handelt. Dieser Pulverlack kann dann gegebenenfalls in Wasser dispergiert werden, wodurch ein Pulverslurry-Basislack resultiert.

Der erfindungsgemäße Basis lack kann ein Zwei- oder Mehrkomponentensystem sein, bei dem zumindest der Bestandteil (C) getrennt von den übrigen Bestandteilen gelagert und erst kurz vor der Verwendung zu diesen hinzugegeben wird. In diesem Falle kann der erfindungsgemäße Basislack auch wäßrig sein, wobei der Bestandteil (C) vorzugsweise in einer ein Lösemittel (I) enthaltenden Komponente vorliegt. Diese Variante des erfindungsgemäßen Basislacks wird vor allem für die Autoreparaturlackierung angewandt

Des weiteren kann der erfindungsgemäße Basislack Bestandteil eines sogenannten Mischsystems oder Modulsystems sein, wie es beispielsweise in den Patentschriften DE-A-41 10 520, EP-A-0 608 773, EP-A-0 614 951 oder EP-A-0 471 972 beschrieben wird.

Vorzugsweise liegt der erfindungsgemäße Basislack als wäßrige Lösung, Dispersion und/oder Emulsion, insbesondere Dispersion, vor, weil hierbei die Isolierung des erfindungsgemäß zu verwendenden Copolymerisats (A) entfallen kann

Die Herstellung des erfindungsgemäßen Basislacks aus seinen Bestandteilen (A) und (B), sowie gegebenenfalls mindestens einem seiner Bestandteile (A; übliche und bekannte Bindemittel), (C), (D), (E), (F), (G), (H) und/oder (I) weist keine Besonderheiten auf, sondern erfolgt in üblicher und bekannter Weise durch Vermischen der Bestandteile in geeigneten Mischaggregaten wie Rührkessel, Dissolver oder Extruder nach den für die Herstellung der jeweiligen Basislacke geeigneten Verfahren.

Der erfindungsgemäße Basislack dient der Herstellung der erfindungsgemäßen Basislackierung BL und Mehrschichtlackierung ML auf grundierten oder ungrundierten Substraten.

Als Substrate kommen im Grunde alle zu lackierenden Oberflächen, die durch eine Härtung der hierauf befindlichen Lackierungen unter Anwendung von Hitze und gegebenenfalls aktinischer Strahlung nicht geschädigt werden, in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gipsund Zementplatten oder Dachziegel, sowie Verbunde dieser Materialien.

Demnach ist der erfindungsgemäße Basislack im Grunde auch für Anwendungen außerhalb der Automobillackierung geeignet, beispielsweise in der industriellen Lackierung, inklusive Coil Coating und Container Coating. Im Rahmen der industriellen Lackierungen eignet er sich für die Lackierung praktisch aller Teile und Gegenstände für den privaten oder industriellen Gebrauch wie Radiatoren, Haushaltsgeräte, Kleinteile aus Metall, Radkappen oder Felgen. Darüber hinaus kommt der erfindungsgemäße Basislack auch für die Lackierung von Möbeln in Betracht.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Basislack können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäßen Basislacks weist keine methodischen Besonderheiten auf, sondern kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikation kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Basislacks und seines gegebenenfalls wiederaufzubereitenden Overspray eintreten. So kann das Heißspritzen so ausgestaltet sein, daß der Basislack nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Basislack selbst, betrieben wird.

Sofern der erfindungsgemäße Basislack Bestandteile (D) enthält, die mit aktinischer Strahlung vernetztbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Basislacks und des Overspray vermieden.

Die vorstehend beschriebenen Applikationsmethoden können im Rahmen des erfindungsgemäßen Verfahrens zur Herstellung aller Schichten FL und KL sowie gegebenenfalls weiterer Lackschichten der erfindungsgemäßen Mehrschichtlackierung ML angewandt werden.

Erfindungsgemäß kann die Basislackschicht je nach ihrer stofflichen Zusammensetzung thermisch und/oder mit aktinischer Strahlung ausgehärtet werden.

Die Aushärtung kann nach einer gewissen Ruhezeit erfolgen. Sie kann eine Dauer von 30 s bis 2 h, vorzugsweise 1 mm bis 1 h und insbesondere 1 min bis 30 min haben. Die Ruhezeit dient beispielsweise zum Verlauf und zur Entgasung der Lackschichten oder zum Verdunsten von flüchtigen Bestandteilen wie Lösemittel, Wasser oder Kohlendioxid, wenn der Basislack mit überkritischem Kohlendioxid als Lösemittel (I) appliziert worden ist. Die Ruhezeit kann durch die Anwendung erhöhter Temperaturen bis 80 °C unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100°C, besonders bevorzugt 80 bis 100°C und insbesondere 90 bis 100°C während einer Zeit von 1 min bis zu 2 h, besonders bevorzugt 2 mm bis zu 1 h und insbesondere 3 min bis 30 min. Werden Substrate verwendet, welche thermisch stark belastbar sind, kann die thermische Vernetzung auch bei Temperaturen oberhalb 100°C durchgeführt werden. Im allgemeinen empfiehlt es sich, hierbei Temperaturen von 160°C, vorzugsweise 140°C und insbesondere 130°C nicht zu überschreiten.

Die thermische Härtung kann bei entsprechender stofflicher Zusammensetzung des Basislacks durch die Härtung mit aktinischer Strahlung ergänzt werden, wobei UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und andere konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist, aufgrund seines allgemeinen Fachwissens gegebenenfalls unter Zuhilfenahme einfacher Vorversuche ermitteln.

Insbesondere die Kombination von thermischer Härtung und Härtung mit aktinischer Strahlung (Dual Cure) bietet auch bei den erfindungsgemäßen Basislacken mit sehr hohem Pigmentgehalt noch Vorteile, die insbesondere darin liegen, daß die Basislackschichten in ihren substramahen Bereichen in der Hauptsache thermisch und in ihren Oberflächenbereichen zusätzlich durch Strahlung gehärtet werden, was zu Basislackierungen BL mit einer besonders hohen Oberflächenqualität führt

Diese Härtungsmethoden können im Rahmen des erfindungsgemäßen Verfahrens zur Herstellung aller Schichten FL und KL sowie gegebenenfalls weiterer Lackschichten der erfindungsgemäßen Mehrschichtlackierung ML angewandt werden.

Die resultierenden erfindungsgemäßen Basislackierungen BL weisen eine Schichtdicke von 5 bis 50, vorzugsweise 10 bis 40, besonders bevorzugt 12 bis 30 und insbesondere 15 bis 25 µm auf.

Die erfindungsgemäßen Füllerschichten oder Steinschlagschutzgrundierungen FL sind die wesentlichen Bestandteile der erfindungsgemäßen Mehrschichtlackierung ML.

Die erfindungsgemäßen Mehrschichtlackierungen ML können nach dem erfindungsgemäßen Verfahren in unterschiedlicher Weise hergestellt werden.

In einer ersten bevorzugten Variante umfaßt das erfindungsgemäße Verfahren die folgenden Verfahrensschritte:
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung BL und die Klarlackierung KL resultieren (Naß-in-naß-Verfahren).

Eine zweite bevorzugte Variante des erfindungsgemäßen Verfahrens umfaßt die Verfahrensschritte:
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung BL und die Klarlackierung KL resultieren (Naß-in-naß-Verfahren).

Welche der bevorzugten Varianten gewählt wird, richtet sich nach dem Verwendungszweck der erfindungsgemäßen Mehrschichtlackierungen ML. So wird insbesondere die zweite Variante bei der Automobilserienlackierung besonders bevorzugt angewandt.

Wäßrige Beschichtungsstoffe, die der Herstellung von Füllerschichten dienen, enthalten als Bindemittel beispielsweise in Wasser lösliche oder dispergierbare Polyester und/oder Polyurethane. Wäßrige Beschichtungsstoffe diese Art sind aus den Patentschriften DE-A-43 37 961, DE-A-44 38 504, DE-C-41 42 816 oder EP-A-0427 028 bekannt.

Als Klarlacke zur Herstellung der Klarlackierung KL kommen alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Beispiele geeigneter bekannter Einkomponenten(1K)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamatund/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke +Farben AG, "Pulverlacke", 1990, bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Demzufolge können die erfindungsgemäßen Mehrschichtlackierungen ML einen unterschiedlichen Aufbau aufweisen.

In einer ersten bevorzugten Variante der erfindungsgemäßen Mehrschichtlackierung ML liegen
(1) eine mechanische Energie absorbierende Füllerschicht FL,
(2) die erfindungsgemäße Basislackierung BL und
(3) eine Klarlackierung KL
in der angegebenen Reihenfolge übereinander.

In einer zweiten bevorzugten Variante der erfindungsgemäßen Mehrschichtlackierung ML liegen
(1) die erfindungsgemäße Basislackierung BL und
(2) eine Klarlackierung KL in der angegebenen Reihenfolge übereinander.

Hierbei kann die Klarlackierung KL noch mit einer hochkratzfesten Beschichtung wie beispielsweise einem organisch modifizierten Keramikmaterial versehen werden.

Bei dem erfindungsgemäßen Verfahren werden die Füllerschicht und Klarlackschicht in einer Naßschichtdicke appliziert, daß nach ihrer Aushärtung Schichten FL und KL mit der für ihre Funktionen notwendigen und vorteilhaften Schichtdicken resultieren. Im Falle der Füllerschicht FL liegt diese Schichtdicke bei 10 bis 150, vorzugsweise 15 bis 120, besonders bevorzugt 20 bis 100, und insbesondere 25 bis 90 µm und im Falle der Klarlackierung KL bei 10 bis 100, vorzugsweise 15 bis 80, besonders bevorzugt 20 bis 70 und insbesondere 25 bis 60 µm.

Die erfindungsgemäßen Mehrschichtlackierungen ML weisen aufgrund der besonders vorteilhaften Eigenschaften der erfindungsgemäßen Basislackierungen BL ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen ML die vom Markt geforderte hohe optische Qualität und Zwischenschichthaftung auf und werfen keine Probleme wie mangelnde Schwitzwasserbeständigkeit, Rißbildung (mudcracking) in den erfindungsgemäßen Basislackierungen BL oder Verlaufsstörungen oder Oberflächenstrukturen in den Klarlackierungen KL mehr auf. Insbesondere weist die erfindungsgemäße Mehrschichtlackierung ML einen hervorragenden Metallic-Effekt mit einem ausgeprägten Flop (stark winkelabhängige Helligkeits- und Farbunterschiede), einen hervorragenden D.O.I. (depth of image) und eine hervorragende Oberflächenglätte auf.

Nicht zuletzt erweist es sich aber als ganz besonderer Vorteil, daß mit Hilfe des erfindungsgemäßen Basislacks und des erfindungsgemäßen Verfahrens in einfacher Weise eine Mehrschichtlackierung ML realisiert werden kann, welche ausschließlich auf wäßrigen Lacken und gegebenenfalls pulverförmigen Basislacken basiert.

### Beispiele

### Herstellbeispiel 1

### Die Herstellung einer Dispersion eines Copolymerisats (A)

In einem Stahlreaktor, wie er üblicherweise für die Herstellung von Dispersionen verwendet wird, ausgestattet mit einem Rührer, einem Rückflußkühler und 3 Zulaufgefäßen wurden 52,563 Gewichtsteile VE-Wasser vorgelegt und auf 90 °C erhitzt. In dem ersten Zulaufgefäß wurden 10,182 Gewichtsteile Acrylsäure, 18,345 Gewichtsteile Methylmethacrylat und 1,493 Gewichtsteile Diphenylethylen vorgelegt. In dem zweiten Zulaufgefäß wurden 9,914 Gewichtsteile 25 prozentige Ammoniaklösung vorgelegt. In dem dritten Zulaufgefäß wurden 5,25 Gewichtsteile VE-Wasser und 2,253 Gewichtsteilen Ammoniumperoxodisulfat vorgelegt. Unter intensivem Rühren der Vorlage im Stahlreaktor wurden die drei Zuläufe gleichzeitig gestartet. Der erste und zweite Zulauf wurden innerhalb einer Stunde zudosiert. Der dritte Zulauf wurde innerhalb 1,25 Stunden zudosiert. Das resultierende Reaktionsgemisch wurde während vier Stunden bei 90 °C gehalten und anschließend auf unter 40 °C abgekühlt und durch einen 100 µm-GAF-Beutel abfiltriert. Die resultierende Dispersion wies einen Festkörpergehalt von 32 bis 34 Gew.-% (1 Stunde, 130 °C) und einen Gehalt an freien Monomeren von weniger als 0,2 Gew.-% (bestimmt durch Gaschromatographie) auf.

Die Dispersion (A) wurde für die Herstellung eines Blockmischpolymerisats (A) verwendet.

### Herstellbeispiel 2

### Die Herstellung einer Dispersion eines Blockmischpolymerisats (A)

In einem Stahlreaktor, wie er üblicherweise für die Herstellung von Dispersionen verwendet wird, ausgestattet mit einem Rührer, einem Rückflußkühler und einem Zulaufgefäß wurden 51,617 Gewichtsteile VE-Wasser und 9,907 Gewichtsteile der Dispersion gemäß Herstellbeispiel 1 vorgelegt und unter Rühren auf 90 °C erhitzt. Hiernach wurde aus dem Zulaufgefäß innerhalb sechs Stunden eine Mischung aus 9,856 Gewichtsteile n-Butylmethacrylat, 7,884 Gewichtsteile Styrol, 12,661 Gewichtsteile Hydroxyethylmethacrylat und 8,885 Gewichtsteile Ethylhexylmethacrylat hinzudosiert. Die resultierende Reaktionsmischung wurde während zwei Stunden bei 90 °C gerührt. Anschließend wurde die resultierende Dispersion unter 40 °C abgekühlt und durch einen 50 µm-GAF-Beutel abfiltriert. Die Dispersion (A) wies einen Festkörpergehalt von 41 bis 42 Gew.-% (1 Stunde, 130 °C) und einem Gehalt an freien Monomeren von weniger als 0,2 Gew.-% (bestimmt durch Gaschromatographie) auf.

### Beispiel 1

### 1.2 Die Herstellung eines erfindungsgemäßen Metallic-Basislacks

### 1.2.1 Die Herstellung einer Farbpaste

Für die Herstellung des Metallic-Basislacks wurde zunächst eine Farbpaste aus 50 Gewichtsteilen der Dispersion (A) gemäß Herstellbeispiel 2, 2 Gewichtsteilen Pluriol® P900 (BASF AG), 43 Gewichtsteilen Sicopalgelb® L1100 (BASF AG), 0,4 Gewichtsteilen Agitan® 281 (handelsübliches Entschäumungsmittel; Münzing Chemie GmbH) hergestellt. Die Mischung wurde in einem Dissolver während zehn Minuten vordispergiert und anschließend in einer Sandmühle auf eine Hegmann-Feinheit < 5 µm gemahlen. Die Viskosität der resultierenden Farbpaste lag bei 424 mPas bei einer Scherrate von 1.000 s ⁻¹ und 23 °C.

Für die Vermischung mit der Metallic-Paste wurden 37,2 Gewichtsteile der Farbpaste mit 62,8 Gewichtsteilen der Dispersion (A) gemäß Herstellbeispiel 2 sowie mit 5 Gewichtsteilen Wasser versetzt.

### 1.2.2 Die Herstellung eines Thixotropierungsmittels

Für die Herstellung des Metallic-Basislacks wurde des weiteren ein Thixotropierungsmittel aus 94 Gewichtsteilen VE-Wasser, 3,0 Gewichtsteilen Laponite® RD (Solvay Alkali GmbH) und Pluriol® P900 (BASF AG) hergestellt.

### 1.2.3. Die Herstellung einer Polyesterdispersion

Für die Herstellung des Metallic-Basislacks wurde des weiteren ein Polyester in üblicher und bekannter Weise aus 23,23 Gewichtsteilen Dimerfettsäure (Pripol® 1009), 10,43 Gewichtsteilen 1,6-Hexandiol, 6,28 Gewichtsteilen Hexahydrophthalsäureanhydrid, 9,9 Gewichtsteilen Neopentylglykol und 10,43 Gewichtsteilen Trimellithsäureanhydrid hergestellt. Als Schleppmittel wurde ein Gewichtsteil Cyclohexan verwendet.

Der resultierende Polyester wurde in mit 17,48 Gewichtsteilen VE-Wasser, 18,9 Gewichtsteilen Butylglykol und 2,25 Gewichtsteilen Dimethylethanolamin dispergiert.

### 1.2.4 Die Herstellung einer Metallic-Paste

Für die Herstellung des Metallic-Basislacks wurde eine Metallic-Paste aus 378,7 Gewichtsteilen des Thixotropierungsmittels gemäß Beispiel 1.2.1, 74 Gewichtsteilen eines handelsüblichen Polyesters (Maprenai® VM 3924), 70 Gewichtsteilen Butylglykol, 334,5 Gewichtsteilen der Dispersion (A) gemäß dem Herstellbeispiel 2, 5 Gewichtsteilen eines handelsüblichen Netzmittels (BYK® 346), 50,6 Gewichtsteilen einer handelsüblichen Aluminiumpaste (Stapa Hydroiux® 8154), 86 Gewichtsteilen des Polyesters gemäß Beispiel 1.2.3 und 33 Gewichtsteilen VE-Wasser hergestellt.

Der pH-Wert der Metallic-Paste wurde mit 10 %-iger Dimethylethanolaminlösung auf 7,8 eingestellt. Die Viskosität der Metallic Paste wurde durch weitere Zugabe von Wasser auf 80 mPas eingestellt.

### 1.2.5 Die Herstellung des Metallic-Basislacks

Der Metallic-Basislack wurde durch Vermischen der Farbpaste gemäß Beispiel 1.2.1 und der Metallic-Paste gemäß Beispiel 1.2.4 im Gewichtsverhältnis von 2 : 10 hergestellt.

### Beispiel 2

### Die Herstellung einer erfindungsgemäßen Mehrschichtlackierung ML

Für die Herstellung der erfindungsgemäßen Mehrschichtlackierung ML wurden übliche und bekannte Prüftafeln aus Stahl verwendet, welche mit einer Elektrotauchlackierung, hergestellt aus einem handelsüblichen Elektrotauchlack, und mit einer Füllerschicht, hergestellt aus einem handelsüblichen Füller, lackiert waren.

Der erfindungsgemäße Basislack des Beispiels 1 wurde mit Hilfe eines 100 µm-Kastenrakels auf die Füllerschicht appliziert. Die resultierende Basislackschicht wurde während 10 Minuten bei Raumtemperatur und während 10 Minuten bei 80°C vorgetrocknet und anschließend mit Hilfe des 100 µm-Kastenrakels mit einem handelsüblichen Klarlack (FQ240016 von BASF Coatings AG) beschichtet.

Hiernach wurde die Klarlackschicht während 15 Minuten bei Raumtemperatur vorgetrocknet, wonach die Klarlackschicht und die Basislackschicht gemeinsam während 30 Minuten bei 135°C eingebrannt wurden.

Die resultierende erfindungsgemäßen Mehrschichtlackierung ML wies ein hervorragendes optisches Eigenschaftsprofil, insbesondere einen ausgeprägten Flop, auf.

## Patentansprüche

1. Verwendung eines Copolymerisats (A), herstellbar durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium, in einem Basislack, der der Herstellung von farb- und/oder effektgebenden Basislackierungen BL und Mehrschichtlackierungen ML dient.

2. Basislack, enthaltend
A) als Bindemittel oder eines der Bindemittel mindestens ein Copolymerisat, das durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyloder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar ist;
und
B) mindestens ein farb- und/oder effektgebendes Pigment.

3. Die Verwendung nach Anspruch 1 und der Basislack nach Anspruch 2, **dadurch gekennzeichnet, daß** das Copolymerisat (A) erhältlich ist, indem man
(i) mindestens ein Monomer (a) und mindestens ein Monomer (b) in einem wäßrigen Medium radikalisch polymerisiert, wonach man
(ii) das resultierende Umsetzungsprodukt mit mindestens einem weiteren Monomer (a) unter radikalischen Bedingungen umsetzt.

4. Die Verwendung nach Anspruch 1 oder 3 und der Basislack nach Anspruch 2 oder 3, **dadurch gekennzeichnet, daß** es sich bei den Arylresten R¹, R², R³ und/oder R⁴ der Verbindung (b) um Phenyl- oder Naphthylreste, insbesondere Phenylreste, handelt.

5. Die Verwendung nach einem der Ansprüche 1, 3 oder 4 und der Basislack nach einem der Ansprüche 2 bis 4, **dadurch gekennzeichnet, daß** die Substituenten in den Resten R¹, R², R³ und/oder R⁴ der Verbindung (b) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste; Hydroxylgruppen und/oder primäre, sekundäre und/oder tertiäre Aminogruppen sind.

6. Die Verwendung nach einem der Ansprüche 1 oder 3 bis 5 und der Basislack nach einem der Ansprüche 2 bis 5, **dadurch gekennzeichnet, daß** als Monomere (a)
a1) im wesentlichen säuregruppenfreie (Meth)Acrylsäureester;
a2) Monomere, welche mindestens eine Hydroxylgruppe, Aminogruppe, Alkoxymethylaminogruppe oder Iminogruppe pro Molekül tragen und im wesentlichen säuregruppenfrei sind;
a3) Monomere, welche mindestens eine Säuregruppe, die in die entsprechende Säureaniongruppe überführbar ist, pro Molekül tragen;
a4) Vinylester von in alpha-Stellung verzweigten Monocarbonsäuren mit 5 bis 18 Kohlenstoffatome im Molekül;
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
a6) cyclische und/oder acyclische Olefine;
a7) (Meth)Acrylsäureamide;
a8) Epoxidgruppen enthaltende Monomere;
a9) vinylaromatische Kohlenwasserstoffe;
a10) Nitrile;
a11) Vinylverbindungen, insbesondere Vinyl- und/oder Vinylidendihalogenide, N-Vinylpyrrolidon, Vinylether und/oder Vinylester;
a12) Allylverbindungen, insbesondere Allylether und -ester;
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder cycloalkylestern der (Meth)Acrylsäure (Monomere a2);
verwendet werden.

7. Die Verwendung nach einem der Ansprüche 1 oder 3 bis 6 und der Basislack nach einem der Ansprüche 2 bis 6, **dadurch gekennzeichnet, daß** der Basislack mindestens einen der nachfolgenden Bestandteile enthält:
A) mindestens ein von dem Copolymerisat (A) verschiedenes Bindemittel mit mindestens einer funktionellen Gruppe (afg), welche mit komplementären funktionellen Gruppen (cfg) im Vernetzungsmittel (C) thermische Vernetzungsreaktionen eingehen kann;
C) mindestens ein Vernetzungsmittel mit mindestens zwei funktionellen Gruppen (cfg), welche mit komplementären funktionellen Gruppen (afg) im Bestandteil (A) thermische Vernetzungsreaktionen eingehen können,
D) mindestens einen Bestandteil, welcher mit aktinischer Strahlung vernetztbar ist,
E) mindestens einen Photoinitiator,
F) mindestens einen Initiator der thermischen Vernetzung,
G) mindestens einen mit aktinischer Strahlung und/oder thermisch härtbaren Reaktivverdünner;
H) mindestens ein Lackadditiv und/oder
I) mindestens ein organisches Lösemittel
enthält.

8. Verfahren zur Herstellung einer farb- und/oder effektgebenden Mehrschichtlackierung ML auf einem grundierten oder ungrundierten Substrat durch
(I) Herstellen einer Basislackschicht durch Applikation eines Basislacks auf das Substrat,
(II) Trocknen der Basislackschicht,
(III) Herstellen einer Klarlackschicht durch Applikation eines Klarlacks auf die Basislackschicht und
(IV) gemeinsame Härtung der Basislackschicht und der Klarlackschicht, wodurch die Basislackierung BL und die Klarlackierung KL resultieren,
oder
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung BL und die Klarlackierung KL resultieren,
**dadurch gekennzeichnet, daß** als Basislack der Basislack gemäß einem der Ansprüche 2 bis 7 verwendet wird.

9. Farb- und/oder effektgebende Mehrschichtlackierung ML für ein grundiertes oder ungrundiertes Substrat, enthaltend in der angegebenen Reihenfolge übereinanderliegend
(1) eine farb- und/oder effektgebende Basislackierungen BL und
(2) eine Klarlackierung KL
oder
(1) eine mechanische Energie absorbierende Füllerschicht FL,
(2) eine farb- und/oder effektgebende Basislackierung BL und
(3) eine Klarlackierung KL,
**dadurch gekennzeichnet, daß** die Basislackierung BL mit dem Basislack gemäß einem der Ansprüche 2 bis 7 hergestellt wird.

10. Verwendung der Mehrschichtlackierung ML gemäß Anspruch 9 oder des Verfahrens gemäß Anspruch 8 für die Automobilerst- und - reparaturlackierung, die industrielle Lackierung, inclusive Coil Coating und Container Coating, die Kunststofflackierung und die Möbellackierung.

11. Grundierte oder ungrundierte Substrate, enthaltend mindestens eine Mehrschichtlackierung ML gemäß Anspruch 9 oder mindestens eine nach dem Verfahren gemäß Anspruch 8 hergestellte Mehrschichtlackierung ML.

## Claims

1. Use of a copolymer (A) preparable by free-radical polymerization of
a) at least one olefinically unsaturated monomer and
b) at least one olefinically unsaturated monomer different from the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals;
in an aqueous medium, in a basecoat material used to produce colour and/or effect basecoats BL and multicoat colour and/or effect coating systems ML.

2. Basecoat material comprising
(A) as binder, or one of the binders, at least one copolymer preparable by free-radical polymerization of
a) at least one olefinically unsaturated monomer and
b) at least one olefinically unsaturated monomer different from the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals,
in an aqueous medium;
and
(B) at least one colour and/or effect pigment.

3. Use according to Claim 1 or basecoat material according to Claim 2, **characterized in that** the copolymer (A) is obtainable by
(i) subjecting at least one monomer (a) and at least one monomer (b) to free-radical polymerization in an aqueous medium, and then
(ii) reacting the resultant reaction product with at least one further monomer (a) under free-radical conditions.

4. Use according to Claim 1 or 3 or basecoat material according to Claim 2 or 3, **characterized in that** the aryl radicals R¹, R², R³ and/or R⁴ of the compound (b) comprise phenyl or naphthyl radicals, especially phenyl radicals.

5. Use according to any of Claims 1, 3 and 4 or basecoat according to any of Claims 2 to 4, **characterized in that** the substituents in radicals R¹, R², R³ and/or R⁴ of the compound (b) are electron-donating or electron-withdrawing atoms or organic radicals, especially halogen atoms, nitrile, nitro, partially or fully halogenated alkyl, cycloalkyl, alkylcycloalkyl, cycloalkylalkyl, aryl, alkylaryl, cycloalkylaryl, arylalkyl and arylcycloalkyl radicals; aryloxy, alkyloxy and cycloalkyloxy radicals; arylthio, alkylthio and cycloalkylthio radicals; hydroxyl groups and/or primary, secondary and/or tertiary amino groups.

6. Use according to any of Claims 1 and 3 to 5 or basecoat material according to any of Claims 2 to 5, **characterized in that** monomers (a) comprise
a1) (meth)acrylic esters which are essentially free from acid groups;
a2) monomers which carry per molecule at least one hydroxyl group, amino group, alkoxymethylamino group or imino group and are essentially free from acid groups;
a3) monomers which carry per molecule at least one acid group which can be converted to the corresponding acid anion group;
a4) vinyl esters of alpha-branched monocarboxylic acids having 5 to 18 carbon atoms in the molecule;
a5) reaction products of acrylic acid and/or methacrylic acid with the glycidyl ester of an alpha-branched monocarboxylic acid having 5 to 18 carbon atoms per molecule;
a6) cyclic and/or acyclic olefins;
a7) (meth)acrylamides;
a8) monomers containing epoxide groups;
a9) vinylaromatic hydrocarbons;
a10) nitriles;
a11) vinyl compounds, especially vinyl halides and/or vinylidene dihalides, N-vinylpyrrolidone, vinyl ethers and/or vinyl esters;
a12) allyl compounds, especially allyl ethers and allyl esters;
a13) polysiloxane macromonomers having a number-average molecular weight Mn of from 1000 to 40,000 and having on average from 0.5 to 2.5 ethylenically unsaturated double bonds per molecule; and/or
a14) acryloxysilane-containing vinyl monomers, preparable by reacting hydroxyl-functional silanes with epichlorohydrin and then reacting the reaction product with (meth)acrylic acid and/or hydroxyalkyl and/or hydroxycycloalkyl esters of (meth)acrylic acid (monomers a2).

7. Use according to any of Claims 1 and 3 to 6 or basecoat material according to any of Claims 2 to 6, **characterized in that** the basecoat material comprises at least one of the following constituents:
A) at least one binder different from the copolymer (A) and containing at least one functional group (afg) which is able to undergo thermal crosslinking reactions with complementary functional groups (cfg) in the crosslinking agent (C);
C) at least one crosslinking agent containing at least two functional groups (cfg) which are able to undergo thermal crosslinking reactions with complementary functional groups (afg) in the constituent (A),
D) at least one constituent which is crosslinkable with actinic radiation,
E) at least one photoinitiator,
F) at least one thermal crosslinking initiator,
G) at least one reactive diluent curable thermally and/or with actinic radiation,
H) at least one coatings additive, and/or
I) at least one organic solvent.

8. Process for producing a multicoat colour and/or effect coating system ML on a primed or unprimed substrate by
(I) preparing a basecoat film by applying a basecoat material to the substrate,
(II) drying the basecoat film,
(III) preparing a clearcoat film by applying a clearcoat material to the basecoat film, and
(IV) jointly curing the basecoat film and the clearcoat film to give the basecoat BL and the clearcoat KL,
or
(I) preparing a surfacer film by applying a surfacer to the substrate,
(II) curing the surfacer film to give the surfacer coat FL,
(III) preparing a basecoat film by applying a basecoat material to the surfacer coat FL,
(IV) drying the basecoat film,
(V) preparing a clearcoat film by applying a clearcoat material to the basecoat film, and
(VI) jointly curing the basecoat film and the clearcoat film to give the basecoat BL and the clearcoat KL,
**characterized in that** the basecoat material according to any of Claims 2 to 7 is used as basecoat material.

9. Multicoat colour and/or effect coating system ML for a primed or unprimed substrate, comprising - situated above one another in the stated sequence
(1) a colour and/or effect basecoat BL, and
(2) a clearcoat KL
or
(1) a surfacer coat FL which absorbs mechanical energy,
(2) a colour and/or effect basecoat BL, and
(3) a clearcoat KL,
**Characterized in that** the basecoat BL is produced with the basecoat material according to any of Claims 2 to 7.

10. Use of the multicoat system ML according to Claim 9, or of the process according to Claim 8 for automotive OEM finishing and refinishing, industrial coating, including coil coating and container coating, the coating of plastics, and furniture coating.

11. Primed or unprimed substrate comprising at least one multicoat system ML according to Claim 9 or at least one multicoat system ML produced by the process according to Claim 8.

## Revendications

1. Utilisation d'un copolymère (A) pouvant être préparé par polymérisation radicalaire, dans un milieu aqueux, de
a) au moins un monomère à insaturation oléfinique et
b) au moins un monomère à insaturation oléfinique différent du monomère à insaturation oléfinique (a), de formule générale I
R¹R²C=CR³R⁴ (I)
dans laquelle les radicaux R¹, R², R³ et R⁴ représentent, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués ; dans une peinture de fond servant à la production de revêtements de peinture colorants et/ou à effet BL et de revêtements de peinture multicouches ML.

2. Peinture de fond contenant
A) en tant que liant ou un des liants au moins un copolymère pouvant être préparé par polymérisation radicalaire, dans un milieu aqueux, de
a) au moins un monomère à insaturation oléfinique et
b) au moins un monomère à insaturation oléfinique différent du monomère à insaturation oléfinique (a), de formule générale I
R¹R²C=CR³R⁴ (I)
dans laquelle les radicaux R¹, R², R³ et R⁴ représentent, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués ;
et
B) au moins un pigment colorant et/ou à effet.

3. Utilisation selon la revendication 1 et peinture de fond selon la revendication 2, **caractérisées en ce que** le copolymère (A) peut être obtenu par
(i) polymérisation radicalaire d'au moins un monomère (a) et d'au moins un monomère (b) dans un milieu aqueux, puis
(ii) mise en réaction du produit de réaction résultant avec au moins un autre monomère (a), dans des conditions radicalaires.

4. Utilisation selon la revendication 1 ou 3 et peinture de fond selon la revendication 2 ou 3, **caractérisées en ce que** les radicaux aryle R¹, R², R³ et/ou R⁴ du composé (b) sont des radicaux phényle ou naphtyle, en particulier des radicaux phényle.

5. Utilisation selon l'une quelconque des revendications 1, 3 et 4 et peinture de fond selon l'une quelconque des revendications 2 à 4, **caractérisées en ce que** les substituants dans les radicaux R¹, R², R³ et/ou R⁴ du composé (b) sont des atomes attirant les électrons ou repoussant les électrons ou des radicaux organiques, en particulier des atomes d'halogène, des radicaux nitrile, nitro, des radicaux alkyle, cycloalkyle, alkylcycloalkyle, cycloalkylalkyle, aryle, alkylaryle, cycloalkylaryle, arylalkyle et arylcycloalkyle, partiellement ou totalement halogénés ; des radicaux aryloxy, alkyloxy et cycloalkyloxy ; des radicaux arylthio, alkylthio et cycloalkylthio ; des groupes hydroxy et/ou des groupes amino primaires, secondaires et/ou tertiaires.

6. Utilisation selon l'une quelconque des revendications 1 et 3 à 5 et peinture de fond selon l'une quelconque des revendications 2 à 5, **caractérisées en ce qu'**on utilise en tant que monomères (a)
a1) des esters d'acide (méth)acrylique essentiellement dépourvus de groupes acides ;
a2) des monomères qui portent au moins un groupe hydroxy, un groupe amino, un groupe alcoxyméthylamino ou un groupe imino par molécule et sont essentiellement dépourvus de groupes acides ;
a3) des monomères qui portent par molécule au moins un groupe acide qui peut être converti en le groupe anion d'acide correspondant ;
a4) des esters vinyliques d'acides monocarboxyliques ramifiés en position alpha, ayant de 5 à 18 atomes de carbone dans la molécule ;
a5) des produits de réaction à base d'acide acrylique et/ou d'acide méthacrylique avec l'ester glycidylique d'un acide monocarboxylique ramifié en position alpha, ayant de 5 à 18 atomes de carbone par molécule ;
a6) des oléfines cycliques et/ou acycliques ;
a7) des (méth)acrylamides ;
a8) des monomères contenant des groupes époxy ;
a9) des hydrocarbures vinylaromatiques ;
a10) des nitriles ;
a11) des composés vinyliques, en particulier des dihalogénures de vinyle et/ou de vinylidène, la N-vinylpyrrolidone, des éthers vinyliques et/ou des esters vinyliques ;
a12) des composés allyliques, en particulier des éthers et esters allyliques ;
a13) des macromonomères polysiloxane qui ont une masse moléculaire moyenne en nombre Mn de 1 000 à 40 000 et comportent par molécule en moyenne de 0,5 à 2,5 doubles liaisons à insaturation éthylénique ; et/ou
a14) des monomères vinyliques contenant des groupements acryloxysilane, pouvant être préparés par réaction de silanes à fonction hydroxy avec l'épichlorhydrine et réaction subséquente du produit de réaction avec l'acide méthacrylique et/ou des esters d'hydroxyalkyle et/ou de cycloalkyle de l'acide (méth)acrylique (monomères a2).

7. Utilisation selon l'une quelconque des revendications 1 et 3 à 6 et peinture de fond selon l'une quelconque des revendications 2 à 6, **caractérisées en ce que** la peinture de fond contient au moins l'un des composants suivants :
A) au moins un liant, différent du copolymère (A), comportant au moins un groupe fonctionnel (afg) qui peut participer à des réactions de réticulation thermique avec des groupes fonctionnels complémentaires (cfg) dans l'agent de réticulation (C) ;
C) au moins un agent de réticulation comportant au moins deux groupes fonctionnels (cfg) qui peuvent participer à des réactions de réticulation thermique avec des groupes fonctionnels complémentaires (afg) dans le composant (A) ;
(D) au moins un composant qui est réticulable à l'aide d'un rayonnement actinique ;
(E) au moins un photoamorceur ;
(F) au moins un amorceur de la réticulation thermique ;
(G) au moins un diluant réactif durcissable thermiquement et/ou à l'aide d'un rayonnement actinique ;
(H) au moins un additif pour peintures et/ou
(I) au moins un solvant organique.

8. Procédé pour la production d'un revêtement de peinture multicouche colorant et/ou à effet ML sur un subjectile revêtu ou non d'un primaire, par
(I) production d'une couche de peinture de fond par application d'une peinture de fond sur le subjectile,
(II) séchage de la couche de peinture de fond,
(III) production d'une couche de vernis par application d'un vernis sur la couche de peinture de fond et
(IV) durcissement ensemble de la couche de peinture de fond et de la couche de vernis, ce qui donne le revêtement de peinture de fond BL et le revêtement de vernis KL,
ou
(I) production d'une couche de peinture de garnissage par application d'un apprêt de garnissage sur le subjectile,
(II) durcissement de la couche de peinture de garnissage, ce qui donne la couche d'apprêt de garnissage FL,
(III) production d'une couche de peinture de fond par application d'une peinture de fond sur la couche d'apprêt de garnissage FL,
(IV) séchage de la couche de peinture de fond,
(V) production d'une couche de vernis par application d'un vernis sur la couche de peinture de fond et
(VI) durcissement ensemble de la couche de peinture de fond et de la couche de vernis, ce qui donne le revêtement de peinture de fond BL et le revêtement de vernis KL,
**caractérisé en ce qu'**on utilise comme peinture de fond la peinture de selon l'une quelconque des revendications 2 à 7.

9. Revêtement de peinture multicouche colorant et/ou à effet ML pour un subjectile revêtu ou non d'un primaire, contenant superposés dans l'ordre indiqué
(1) un revêtement de peinture de fond colorant et/ou à effet BL et
(2) un revêtement de vernis KL
ou
(1) une couche d'apprêt de garnissage FL absorbant de l'énergie mécanique,
(2) un revêtement de peinture de fond colorant et/ou à effet BL et
(3) un revêtement de vernis KL,
**caractérisé en ce que** le revêtement de peinture de fond BL est produit avec la peinture de fond selon l'une quelconque des revendications 2 à 7.

10. Utilisation du revêtement de peinture multicouche ML selon la revendication 9 ou du procédé selon la revendication 8 pour le premier peinturage et le peinturage de réparation d'automobiles, le peinturage industriel, y compris le peinturage de rubans en continu (*coil coating*) et le peinturage de récipients (*container coating*)*,* le peinturage de matières plastiques et le peinturage de meubles.

11. Subjectiles revêtus ou non d'un primaire, comportant au moins un revêtement de peinture multicouche ML selon la revendication 9 ou au moins un revêtement de peinture multicouche ML produit conformément au procédé selon la revendication 8.
